(19) Europäisches Patentamt
European Patent Office
Office européen des brevets

(11) EP 1 487 036 A1

(12) **EUROPEAN PATENT APPLICATION**
published in accordance with Art. 158(3) EPC

(43) Date of publication:
**15.12.2004 Bulletin 2004/51**

(21) Application number: **03744522.8**

(22) Date of filing: **11.03.2003**

(51) Int Cl.[7]: **H01M 4/06**, H01M 4/62, H01M 4/08, H01M 6/16

(86) International application number:
**PCT/JP2003/002869**

(87) International publication number:
**WO 2003/079468 (25.09.2003 Gazette 2003/39)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.03.2002 JP 2002075971**
**20.03.2002 JP 2002078339**

(71) Applicant: **Bridgestone Corporation**
**Tokyo 104-8340 (JP)**

(72) Inventors:
- **EGUCHI, Shinichi**
  **Kawasaki-shi, Kanagawa 221-0053 (JP)**
- **OTSUKI, Masashi**
  **Musashimurayama-shi, Tokyo 208-0001 (JP)**
- **KANNO, Hiroshi**
  **Kodaira-shi, Tokyo 187-0031 (JP)**

(74) Representative: **Whalley, Kevin**
**MARKS & CLERK,**
**57-60 Lincoln's Inn Fields**
**London WC2A 3LS (GB)**

# (54) POSITIVE ELECTRODE FOR LITHIUM PRIMARY CELL AND ITS PRODUCTION METHOD, AND LITHIUM PRIMARY CELL

(57) In a lithium primary cell comprising a positive electrode, a negative electrode and an electrolyte containing an aprotic organic solvent and a support salt, the discharge capacity and energy density of the cell are improved and the service life is prolonged by applying a paste body containing an active substance for positive electrode and a phosphazene derivative and/or an isomer of a phosphazene derivative to the positive electrode.

EP 1 487 036 A1

## Description

### TECHNICAL FIELD

This invention relates to a positive electrode for a lithium primary cell and a method of producing the same, and a lithium primary cell provided with such a positive electrode.

### BACKGROUND ART

Recently, cells having a small size, a light weight, a long life and a high energy density are particularly demanded with the rapid advance of electronics as a power source for small-size electronic equipments. In this connection, lithium primary cells using, for example, manganese dioxide or graphite fluoride as a positive electrode and lithium as a negative electrode are known as one of cells having a high energy density because an electrode potential of lithium is lowest among metals and an electric capacity per unit volume is large, and many kinds thereof are actively studies.

On the other hand, there are developed run-flat tires capable of continuously running up to a repairing service place over a significant distance even if puncture or the like is caused in a pneumatic tire. Based on this, it is proposed to arrange on the run-flat tire an internal pressure alarm device which measures a tire internal pressure and transmits an accident-informing signal when the internal pressure is dropped to not more than a constant value.

As a power source for the internal pressure alarm device is used the above lithium primary cell having a small size, a light weight, a long life and a high energy density and using manganese dioxide or graphite fluoride as a positive electrode and lithium as a negative electrode.

In the lithium primary cell, lithium is frequently used as a material forming the negative electrode. However, since lithium violently reacts with a compound having an active proton such as water or alcohol, an electrolyte to be used is limited to a non-aqueous or solid electrolyte. Since the solid electrolyte is low in the ion conductivity, it is limited only to the use at a low discharge current. Therefore, the electrolyte usually used at the present time is an aprotic organic solvent such as ester based organic solvent or the like.

### DISCLOSURE OF THE INVENTION

However, it is demanded to upgrade the function of the internal pressure alarm device so as to transmit various informations of the tire in addition to the tire internal pressure, and a power consumption is increased accompanied therewith, so that there are caused problems that the service life becomes short and the exchange is required in a short time when the existing lithium primary cell is used in the power source for such an internal pressure alarm device.

Also, the material for the negative electrode is a lithium metal or a lithium alloy and is very high in the activity to water, so that there is a problem that when the sealing of the cell is incomplete and water is penetrated into the cell, the negative electrode material reacts with water to produce hydrogen or cause ignition and hence the risk becomes high. Furthermore, since the lithium metal is low in the boiling point (about 170°C), as a large current rapidly flows in the short-circuiting or the like, there is a problem that the cell abnormally generates heat to cause a very risky state such as the fusion of the cell or the like. In addition, there is a problem that the electrolyte based on the organic solvent is vaporized and decomposed accompanied with the above heat generation of the cell to produce a gas or the explosion-ignition of the cell is caused by the produced gas or the like. Moreover, even in the lithium primary cell not naturally assuming the recharge, there is a problem that the recharge may be carried out by wrong operation and in this case the ignition is caused.

It is, therefore, an object of the invention to provide a lithium primary cell having a high discharge capacity, a high energy density, a high output and a long service life. It is another object of the invention to provide a lithium primary cell having a high safety in addition to the high discharge capacity, high energy density, high output and long service life.

The inventors have made various studies in order to solve the aforementioned problems and found that lithium primary cells having a high discharge capacity, a high energy density, a high output and a long service life are obtained by improving an active substance for positive electrode in the lithium primary cell to lower an internal resistance of the cell itself, and further lithium primary cells having a high safety in addition to higher discharge capacity and energy density, high output and long service life are obtained by adding a phosphazene derivative and/or an isomer of a phosphazene derivative to an electrolyte, and as a result, the invention has been accomplished.

That is, the invention is as follows.

1. A positive electrode for a lithium primary cell comprising a paste body containing an active substance for positive electrode and a phosphazene derivative and/or an isomer of a phosphazene derivative.
2. A positive electrode for a lithium primary cell according to the item 1, wherein a total mass of the phosphazene

derivative and/or the isomer of the phosphazene derivative is a mass corresponding to 0.01 to 100 times a mass of the active substance for positive electrode.

3. A positive electrode for a lithium primary cell according to the item 1 or 2, wherein the phosphazene derivative has a viscosity at 25°C of not more than 100 mPa · s (100 cP) and is represented by the following formula (I) or (II):

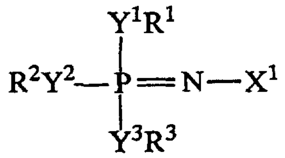

····· (I)

(wherein $R^1$, $R^2$ and $R^3$ are independently a monovalent substituent or a halogen element; $X^1$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^1$, $Y^2$ and $Y^3$ are independently a bivalent connecting group, a bivalent element or a single bond)

$$(NPR^4{}_2)_n \quad \text{(II)}$$

(wherein $R^4$ is independently a monovalent substituent or a halogen element; and n is 3 to 15).

4. A positive electrode for a lithium primary cell according to the item 3, wherein the phosphazene derivative of the formula (II) is represented by the following formula (III):

$$(NPF_2)_n \quad \text{(III)}$$

(wherein n is 3 to 15).

5. A positive electrode for a lithium primary cell according to the item 3, wherein the phosphazene derivative of the formula (II) is represented by the following formula (IV):

$$(NPR^5{}_2)_n \quad \text{(IV)}$$

(wherein $R^5$ is independently a monovalent substituent or a halogen element and at least one of all $R^5$s is a fluorine-containing monovalent substituent or fluorine, and n is 3 to 15, provided that all $R^5$s are not fluorine).

6. A positive electrode for a lithium primary cell according to the item 1 or 2, wherein the phosphazene derivative is a solid at 25°C and is represented by the following formula (V):

$$(NPR^6{}_2)_n \quad \text{(V)}$$

(wherein $R^6$ is independently a monovalent substituent or a halogen element; and n is 3 to 15).

7. A positive electrode for a lithium primary cell according to the item 1 or 2, wherein the isomer is represented by the following formula (VI) and is an isomer of a phosphazene derivative represented by the following formula (VII):

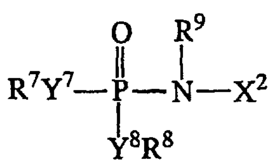

····· (VI)

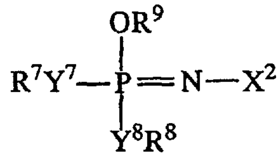 ····· (VII)

(in the formulae (VI) and (VII), $R^7$, $R^8$ and $R^9$ are independently a monovalent substituent or a halogen element; $X^2$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^7$ and $Y^8$ are independently a bivalent connecting group, a bivalent element or a single bond).

8. A method of producing a positive electrode for a lithium primary cell, characterized by comprising (I) a step of milling an active substance for positive electrode and a phosphazene derivative and/or an isomer of a phosphazene derivative to produce a paste; and (II) a step of applying the paste to a positive electrode manufacturing jig and drying and shaping into a desired form to produce a positive electrode of a paste body.

9. A lithium primary electrode comprising a positive electrode described in any one of the items 1 to 7, a negative electrode, and an electrolyte comprising an aprotic organic solvent and a support salt.

10. A lithium primary cell according to the item 9, wherein the aprotic organic solvent is added with a phosphazene derivative and/or an isomer of a phosphazene derivative.

11. A lithium primary cell according to the item 10, wherein the phosphazene derivative and/or the isomer of the phosphazene derivative included in the positive electrode are the same as the phosphazene derivative and/or the isomer of the phosphazene derivative added to the aprotic organic solvent.

12. A lithium primary cell according to the item 10, wherein the phosphazene derivative and/or the isomer of the phosphazene derivative included in the positive electrode are different from the phosphazene derivative and/or the isomer of the phosphazene derivative added to the aprotic organic solvent.

13. A lithium primary cell according to any one of the items 10 to 12, wherein the phosphazene derivative added to the aprotic organic solvent has a viscosity at 25°C of not more than 100 mPa · s (100 cP) and is represented by the following formula (I) or (II):

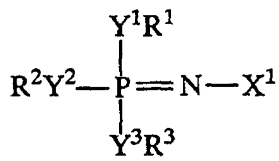 ····· (I)

(wherein $R^1$, $R^2$ and $R^3$ are independently a monovalent substituent or a halogen element; $X^1$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^1$, $Y^2$ and $Y^3$ are independently a bivalent connecting group, a bivalent element or a single bond)

$$(NPR^4{}_2)_n \qquad (II)$$

(wherein $R^4$ is independently a monovalent substituent or a halogen element; and n is 3 to 15).

14. A lithium primary cell according to the item 13, wherein the phosphazene derivative of the formula (II) is represented by the following formula (III):

$$(NPF_2)_n \qquad (III)$$

(wherein n is 3 to 15).

15. A lithium primary cell according to the item 13, wherein the phosphazene derivative of the formula (II) is represented by the following formula (IV):

$$(NPR^5{}_2)_n \qquad (IV)$$

(wherein $R^5$ is independently a monovalent substituent or a halogen element and at least one of all $R^5$s is a fluorine-containing monovalent substituent or fluorine, and n is 3 to 15, provided that all $R^5$s are not fluorine).

16. A lithium primary cell according to any one of the items 10 to 12, wherein the phosphazene derivative added to the aprotic organic solvent is a solid at 25°C and is represented by the following formula (V):

$$(NPR^6{}_2)_n \qquad (V)$$

(wherein $R^6$ is independently a monovalent substituent or a halogen element; and n is 3 to 15).

17. A lithium primary cell according to any one of the items 10 to 12, wherein the isomer of the phosphazene derivative added to the aprotic organic solvent is represented by the following formula (VI) and is an isomer of a phosphazene derivative represented by the following formula (VII):

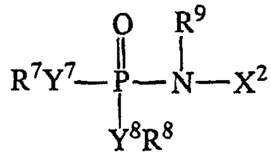

· · · · · (VI)

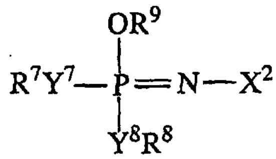

· · · · · (VII)

(in the formulae (VI) and (VII), $R^7$, $R^8$ and $R^9$ are independently a monovalent substituent or a halogen element; $X^2$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^7$ and $Y^8$ are independently a bivalent connecting group, a bivalent element or a single bond).

## BEST MODE FOR CARRYING OUT THE INVENTION

The invention will be described in detail below. In general, a sum of resistance of each material constituting the cell, and resistance produced at each interface between the materials such as between electrolyte and positive electrode, between electrolyte and negative electrode or the like corresponds to an internal resistance of the cell itself. As the internal resistance becomes large, the drop of discharge potential of the cell called as IR drop, which is represented by product of resistance and current applied, is caused. The drop of discharge potential brings about the shortening of a time required in the descending up to a constant voltage (i.e. service life of the cell), and hence admits to drops of the discharge capacity and energy density.

The existing lithium primary cell using manganese dioxide or graphite fluoride as an active substance for a positive electrode can not cope with the increase of the power consumption accompanied with the enhancement of the function of the device using such a lithium primary cell as previously mentioned, so that it is required to develop lithium primary cells having higher discharge capacity and energy density, higher output and longer service life. For this end, the inventors have aimed at the active substance for positive electrode and the internal resistance of the cell itself produced inside the cell and made various studies, and found out that the positive electrode comprising a paste body containing an active substance for positive electrode and a phosphazene derivative and/or an isomer of a phosphazene derivative can make the internal resistance of the cell itself small and hence the discharge capacity and energy density can be improved to provide a lithium primary cell having a high output and a long service life. Also, it has been found out that the internal resistance of the cell itself can be made further small by using the positive electrode comprising a paste body containing an active substance for positive electrode and a phosphazene derivative and/or an isomer of a phosphazene derivative and an electrolyte containing a phosphazene derivative and/or an isomer of a

phosphazene derivative and hence the discharge capacity and energy density can be considerably improved to provide a lithium primary cell having a considerably higher output and a longer service life.

<Positive electrode for lithium primary cell>

The positive electrode of the paste body according to the invention is a shaped body of semi-solid mixture formed by locking the phosphazene derivative and/or the isomer of the phosphazene derivative between particles of the active substance for positive electrode, in which the phosphazene derivative and/or the isomer of the phosphazene derivative never exudes on the surface of the shaped body even if a given force is applied. The positive electrode of the invention contains additives usually used in the technical field of the lithium primary cell such as an electrically conductive material, a binding agent and the like, if necessary.

-Active substance for positive electrode-

The active substance for positive electrode used in the invention is a substance directly contributing to an electromotive reaction at the positive electrode of the cell and is not particularly limited and can be used by properly selecting from well-known active substances. For example, there are preferably mentioned graphite fluoride ($(CF_x)_n$), $MnO_2$ (which may be produced by electrochemical synthesis or chemical synthesis), $V_2O_5$, $MoO_3$, $Ag_2CrO_4$, CuO, CuS, $FeS_2$, $SO_2$, $SOCl_2$, $TiS_2$ and so on. Among them, $MnO_2$, $V_2O_5$ and graphite fluoride are preferable in a point that the capacity, safety and discharge potential are high and the wettability to the electrolyte is excellent, and $MnO_2$ and $V_2O_5$ are more preferable in view of the cost. These substances may be used alone or in a combination of two or more.

The active substance for positive electrode has a particle size of 1-60 μm, preferably 20-40 μm. When the particle size is less than 1 μm or exceeds 60 μm, the packing is deteriorated in the shaping of a positive electrode combined member (consisting of the active substance for positive electrode, electrically conductive material and binding agent) or the amount of the active substance for positive electrode contained per unit volume becomes less and hence the discharge capacity is unfavorably decreased.

-Phosphazene derivative and/or isomer of phosphazene derivative-

A total mass of a phosphazene derivative and/or an isomer of a phosphazene derivative in the positive electrode of the invention is preferably 0.01-100 times, more preferably 0.05-50 times, further preferably 0.1-30 times a mass of the active substance for positive electrode. When the total mass of the phosphazene derivative and/or the isomer of the phosphazene derivative is less than 0.01 times the mass of the active substance for positive electrode, the effect of lowering the internal resistance of the cell itself by incorporating the phosphazene derivative and/or the isomer of the phosphazene derivative into the positive electrode together with the active substance for positive electrode is insufficient, while when it exceeds 100 times, the amount of the active substance for positive electrode per unit volume is decreased and also a suspension is unfavorably produced without forming the paste body.

The phosphazene derivative included in the positive electrode is not particularly limited, but is preferable to be a phosphazene derivative having a viscosity at 25°C of not more than 100 mPa · s (100 cP) and represented by the following formula (I) or (II):

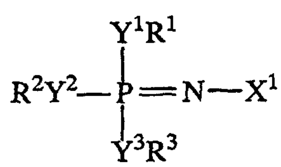

····· (I)

(wherein $R^1$, $R^2$ and $R^3$ are independently a monovalent substituent or a halogen element; $X^1$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^1$, $Y^2$ and $Y^3$ are independently a bivalent connecting group, a bivalent element or a single bond)

$$(NPR^4{}_2)_n \qquad (II)$$

(wherein $R^4$ is independently a monovalent substituent or a halogen element; and n is 3 to 15).

The viscosity at 25°C of the phosphazene derivative represented by the formula (I) or (II) is not more than 100 mPa · s (100 cP) as mentioned above, preferably not more than 20 mPa · s (20 cP).

Moreover, the viscosity in the invention is determined by using a viscosity measuring meter (R-type viscometer Model RE500-SL, made by Toki Sangyo Co., Ltd.) and conducting the measurement at each revolution rate of 1 rpm, 2 rpm, 3 rpm, 5 rpm, 7 rpm, 10 rpm, 20 rpm and 50 rpm for 120 seconds to measure a viscosity under the revolution rate when an indication value is 50-60% as an analytical condition.

In the formula (I), $R^1$ $R^2$ and $R^3$ are not particularly limited unless they are a monovalent substituent or a halogen element. As the monovalent substituent are mentioned an alkoxy group, an alkyl group, a carboxyl group, an acyl group, an aryl group and so on. Among them, the alkoxy group is preferable. As the halogen element are preferably mentioned fluorine, chlorine, bromine and so on. All of $R^1$-$R^3$ may be the same kind of the substituent, or some of them may be different kind of substituents.

As the alkoxy group are mentioned, for example, methoxy group, ethoxy group, propoxy group, butoxy group and the like, or an alkoxy-substituted alkoxy group such as methoxyethoxy group, methoxyethoxyethoxy group or the like. Among them, methoxy group, ethoxy group, propoxy group, methoxyethoxy group or methoxyethoxyethoxy group is preferable as all of $R^1$-$R^3$, and methoxy group, ethoxy group, n-propoxy group or i-propoxy group is particularly preferable. As the alkyl group are mentioned methyl group, ethyl group, propyl group, butyl group, pentyl group and so on. As the acyl group are mentioned formyl group, acetyl group, propionyl group, butylyl group, isobutylyl group, valelyl group and so on. As the aryl group are mentioned phenyl group, tolyl group, naphthyl group and so on.

In these monovalent substituents, it is preferable that hydrogen element is substituted with a halogen element. As the halogen element are preferably mentioned fluorine, chlorine, bromine and so on.

As the bivalent connecting group shown by $Y^1$, $Y^2$ and $Y^3$ in the formula (I) are mentioned, for example, $CH_2$ group as well as a bivalent connecting group containing at least one element selected from the group consisting of oxygen, sulfur, selenium, nitrogen, boron, aluminum, scandium, gallium, yttrium, indium, lanthanum, thallium, carbon, silicon, titanium, tin, germanium, lead, phosphorus, vanadium, arsenic, niobium, antimony, tantalum, bismuth, chromium, molybdenum, tellurium, polonium, tungsten, iron, cobalt and nickel. Among them, $CH_2$ group and the bivalent connecting group containing at least one element selected from the group consisting of oxygen, sulfur, selenium and nitrogen are preferable, and the bivalent connecting group containing sulfur and/or selenium is particularly preferable. Also, $Y^1$, $Y^2$ and $Y^3$ are a bivalent element such as oxygen, sulfur, selenium or the like, or a single bond. All of $Y^1$-$Y^3$ may be the same kind, or some thereof may be different kind.

As $X^1$ in the formula (I) is preferable a substituent containing at least one element selected from the group consisting of carbon, silicon, nitrogen, phosphorus, oxygen and sulfur from a viewpoint of the harmfulness and the consideration on environment or the like. Among these substituents, a substituent having a structure shown by the following formula (VIII), (IX) or (X) is more preferable.

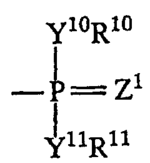

······ (VIII)

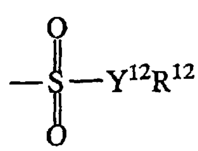

······ (IX)

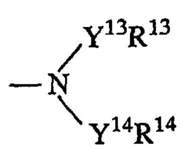

······ (X)

In the formulae (VIII), (IX) and (X), $R^{10}$-$R^{14}$ are a monovalent substituent or a halogen element. $Y^{10}$-$Y^{14}$ are a bivalent connecting group, a bivalent element or a single bond, and $Z^1$ is a bivalent group or a bivalent element.

As $R^{10}$-$R^{14}$ in the formulae (VIII), (IX) and (X) are preferably mentioned the same monovalent substituents

or halogen elements as described on $R^1$-$R^3$ of the formula (I). Also, they may be the same kind in the same substituent, or some of them may be different kind. Further, $R^{10}$ and $R^{11}$ of the formula (VIII), and $R^{13}$ and $R^{14}$ of the formula (X) may be bonded to each other to form a ring.

As the group shown by $Y^{10}$-$Y^{14}$ in the formulae (VIII), (IX) and (X) are mentioned the same bivalent connecting groups or bivalent elements as described on $Y^1$-$Y^3$ of the formula (I), and the group containing sulfur and/or selenium is particularly preferable. They may be the same kind in the same substituent, or some of them may be different kind.

As $Z^1$ in the formula (III) are mentioned, for example, $CH_2$ group, CHR group (R is an alkyl group, an alkoxy group, a phenyl group or the like, and so forth), NR group as well as a bivalent group containing at least one element selected from the group consisting of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group, CHR group, NR group and the bivalent group containing at least one element selected from the group consisting of oxygen, sulfur and selenium are preferable. Particularly, the bivalent group containing sulfur and/or selenium is preferable. Also, $Z^1$ may be a bivalent element such as oxygen, sulfur, selenium or the like.

In the formula (II), $R^4$ is not particularly limited unless it is a monovalent substituent or a halogen element. As the monovalent substituent are mentioned an alkoxy group, an alkyl group, a carboxyl group, an acyl group, an aryl group and so on. Among them, the alkoxy group is preferable. As the halogen element are preferably mentioned fluorine, chlorine, bromine and so on. As the alkoxy group are mentioned methoxy group, ethoxy group, methoxyethoxy group, propoxy group, phenoxy group and so on. Among them, methoxy group, ethoxy group, n-propoxy group and phenoxy group are particularly preferable. In these substituents, hydrogen element is preferable to be substituted with a halogen element. As the halogen element are preferably mentioned fluorine, chlorine, bromine and so on. As a substituent substituted with fluorine atom is mentioned, for example, trifluoroethoxy group.

The synthesis of phosphazene derivatives having a more preferable viscosity is made possible by properly selecting $R^1$-$R^4$, $R^{10}$-$R^{14}$, $Y^1$-$Y^3$, $Y^{10}$-$Y^{14}$ and $Z^1$ in the formulae (I), (II), (VIII)-(X). These phosphazene derivatives may be used alone or in a combination of two or more.

Among the phosphazene derivatives of the formula (II), a phosphazene derivative represented by the following formula (III) is particularly preferable:

$$(NPF_2)_n \qquad \text{(III)}$$

(wherein n is 3-15).

The phosphazene derivatives of the formula (III) may be used alone or in a combination of two or more.

Among the phosphazene derivatives of the formula (II), a phosphazene derivative represented by the following formula (IV) is particularly preferable:

$$(NPR^5{}_2)_n \qquad \text{(IV)}$$

(wherein $R^5$ is independently a monovalent substituent or a halogen element and at least one of all $R^5$s is a fluorine-containing monovalent substituent or fluorine, and n is 3-15, provided that all $R^5$s are not fluorine).

As the monovalent substituent in the formula (IV) are mentioned an alkoxy group an alkyl group, an aryl group, a carboxyl group and so on, and the alkoxy group is particularly preferable. As the alkoxy group are mentioned methoxy group, ethoxy group, n-propoxy group, i-propoxy group, butoxy group, an alkoxy group-substituted alkoxy group such as methoxyethoxy group or the like, and so on, and methoxy group, ethoxy group and n-propoxy group are particularly preferable.

The monovalent substituent is preferable to be substituted with fluorine. When all $R^5$s in the formula (IV) are not fluorine, at least one monovalent substituent contains fluorine. The content of fluorine in the phosphazene derivative is preferably 3-70% by weight, more preferably 7-45% by weight. As the molecular structure of the phosphazene derivative represented by the formula (IV), a halogen element such as chlorine, bromine or the like may be contained in addition to fluorine.

The phosphazene derivatives of the formula (IV) may be used alone or in a combination of two or more.

As the phosphazene derivative included in the positive electrode, a phosphazene derivative being solid at 25°C and represented by the following formula (V) is preferable:

$$(NPR^6{}_2)_n \qquad \text{(V)}$$

(wherein $R^6$ is independently a monovalent substituent or a halogen element; and n is 3-15).

In the formula (V), $R^6$ is not particularly limited unless it is a monovalent substituent or a halogen element. As the monovalent substituent are mentioned an alkoxy group, an alkyl group, a carboxyl group, an acyl group, an aryl group and so on. As the halogen element are preferably mentioned fluorine, chlorine, bromine and so on. Among them, the alkoxy group is particularly preferable.

As the alkoxy group are preferable methoxy group, ethoxy group, methoxyethoxy group, propoxy group (isopropoxy group, n-propoxy group), phenoxy group, trifluoroethoxy group and so on, and methoxy group, ethoxy group, propoxy group (isopropoxy group, n-propoxy group), phenoxy group, trifluoroethoxy group and so on are more preferable. The monovalent substituent is preferable to contain the aforementioned halogen element.

As the phosphazene derivative of the formula (V) are particularly preferable a structure that $R^6$ is methoxy group and n is 3 in the formula (V), a structure that $R^6$ is at least either methoxy group or phenoxy group and n is 4 in the formula (V), a structure that $R^6$ is ethoxy group and n is 4 in the formula (V), a structure that $R^6$ is isopropoxy group and n is 3 or 4 in the formula (V), a structure that $R^6$ is n-propoxy group and n is 4 in the formula (V), a structure that $R^6$ is trifluoroethoxy group and n is 3 or 4 in the formula (V), and a structure that $R^6$ is phenoxy group and n is 3 or 4 in the formula (V).

The molecular structure of the phosphazene derivative represented by the formula (V) is preferable to have a substituent containing a halogen element as previously mentioned. As the halogen element are preferable fluorine, chlorine, bromine and so on, and fluorine is particularly preferable.

The phosphazene derivatives of the formula (V) may be used alone or in a combination of two or more.

The isomer of the phosphazene derivative included in the positive electrode is not particularly limited, but is preferable to be represented by the following formula (VI) and be an isomer of a phosphazene derivative shown by the following formula (VII):

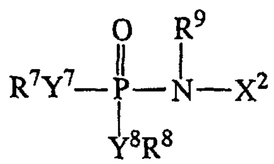

· · · · · (VI)

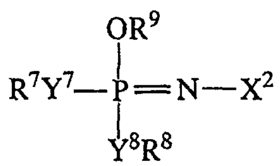

· · · · · (VII)

(in the formulae (VI) and (VII), $R^7$, $R^8$ and $R^9$ are independently a monovalent substituent or a halogen element; $X^2$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^7$ and $Y^8$ are independently a bivalent connecting group, a bivalent element or a single bond).

In the formula (VI), $R^7$, $R^8$ and $R^9$ are not particularly limited unless they are a monovalent substituent or a halogen element. As the monovalent substituent are mentioned an alkoxy group, an alkyl group, a carboxyl group, an acyl group, an aryl group and so on. As the halogen element are preferably mentioned fluorine, chlorine, bromine and so on. Among them, fluorine and alkoxy group are particularly preferable. Also, fluorine, alkoxy group and alkoxy group containing fluorine or the like are preferable. All of $R^7$-$R^9$ may be the same kind of the substituent, or some of them may be different kind of substituents.

As the alkoxy group are mentioned, for example, methoxy group, ethoxy group, propoxy group, butoxy group and the like, and an alkoxy-substituted alkoxy group such as methoxyethoxy group, methoxyethoxyethoxy group or the like. Among them, methoxy group, ethoxy group, methoxyethoxy group or methoxyethoxyethoxy group is preferable as all of $R^7$-$R^9$, and methoxy group or ethoxy group is particularly preferable. As the alkyl group are mentioned methyl group, ethyl group, propyl group, butyl group, pentyl group and so on. As the acyl group are mentioned formyl group, acetyl group, propionyl group, butylyl group, isobutylyl group, valelyl group and so on. As the aryl group are mentioned phenyl group, tolyl group, naphthyl group and so on.

In these substituents, hydrogen element is preferable to be substituted with a halogen element. As the halogen element are preferably mentioned fluorine, chlorine, bromine and so on.

As the bivalent connecting group shown by $Y^7$ and $Y^8$ in the formula (VI) are mentioned, for example, $CH_2$

group, and a bivalent connecting group containing at least one element selected from the group consisting of oxygen, sulfur, selenium, nitrogen, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group and the bivalent connecting group containing at least one element selected from the group consisting of oxygen, sulfur, selenium and nitrogen are preferable. Also, $Y^7$ and $Y^8$ may be a bivalent element such as oxygen, sulfur, selenium or the like, or a single bond. The bivalent connecting group containing sulfur and/or oxygen, oxygen element, and sulfur element are more preferable, and the bivalent connecting group containing oxygen and oxygen element are particularly preferable. $Y^7$ and $Y^8$ may be the same kind or different kinds.

In the formula (VI), $X^2$ is preferable to be a substituent containing at least one element selected from the group consisting of carbon, silicon, nitrogen, phosphorus, oxygen and sulfur from a viewpoint of harmfulness and consideration on environment or the like, and a substituent having a structure shown by the following formula (XI), (XII) or (XIII) is more preferable:

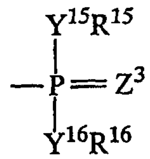

····· (XI)

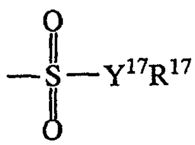

····· (XII)

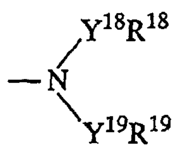

····· (XIII)

In the formulae (XI), (XII) and (XIII), $R^{15}$-$R^{19}$ are a monovalent substituent or a halogen element. $Y^{15}$-$Y^{19}$ are a bivalent connecting group, a bivalent element or a single bond, and $Z^2$ is a bivalent group or a bivalent element.

As $R^{15}$-$R^{19}$ in the formulae (XI), (XII) and (XIII) are preferably mentioned the same monovalent substituents or halogen elements as described in $R^7$-$R^9$ of the formula (VI). They may be the same kind in the same substituent, or some of them may be different kinds. $R^{15}$ and $R^{16}$ in the formula (XI), and $R^{18}$ and $R^{19}$ in the formula (XIII) may be bonded to each other to form a ring.

As the groups shown by $Y^{15}$-$Y^{19}$ in the formula (XI), (XII) and (XIII) are mentioned the same bivalent connecting groups, bivalent elements or the like as described in $Y^7$-$Y^9$ of the formula (VI), and the bivalent connecting group containing sulfur and/or oxygen, oxygen element and sulfur element are more preferable. Particularly, the bivalent connecting group containing oxygen and oxygen element are preferable. They may be the same kind in the same substituent, or some of them may be different kinds.

As $Z^2$ of the formula (XI) are mentioned, for example, $CH_2$ group, CHR' group (R' is an alkyl group, an alkoxyl group, a phenyl group or the like, and so forth), NR' group and a bivalent group containing at least one element selected from the group consisting of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt and nickel. Among them, $CH_2$ group, CHR' group, NR' group and the bivalent group containing at least one element selected from the group consisting of oxygen, sulfur and selenium are preferable. Also, $Z^2$ may be a bivalent element such as oxygen, sulfur, selenium or the like. Particularly, the bivalent group containing sulfur and/or selenium, sulfur element and selenium element are preferable. The bivalent group containing oxygen and oxygen element are more preferable.

By properly selecting $R^7$-$R^9$, $R^{15}$-$R^{19}$, $Y^7$-$Y^8$, $Y^{15}$-$Y^{19}$ and $Z^2$ in the formulae (VI) and (XI)-(XIII) is made possible to synthesis an isomer of a phosphazene derivative having a more preferable viscosity. These compounds may be used alone or in a combination of two or more.

The isomer of the formula (VI) is an isomer of a phosphazene derivative represented by the formula (VII), which can be produced by adjusting a vacuum degree and/or a temperature in the production of the phosphazene derivative shown, for example, by the formula (VII). The content of the isomer in the electrolyte (volume%) can be measured by the following measuring method. «Measuring method»

It can be measured by finding a peak area of a sample through a gel permeation chromatography (GPC) or a high-speed liquid chromatography, comparing the found peak area with a previously found area per mole of the isomer to obtain a molar ratio, and further converting into a volume while considering a specific gravity.

As $R^7$-$R^9$, $Y^7$-$Y^8$ and $X^2$ in the formula (VII) are preferably mentioned the same ones as described on $R^7$-$R^9$, $Y^7$-$Y^8$ and $X^2$ of the formula (VI).

As molecular structures of the isomer of the formula (VI) and the phosphazene derivative of the formula (VII), it is preferable to have a substituent containing a halogen element. As the halogen element, fluorine, chlorine, bromine and the like are preferable, and fluorine is particularly preferable.

-Additive for positive electrode-

Among additives added, if necessary, to the positive electrode for the lithium primary cell according to the invention, acetylene black and the like are mentioned as an electrically conductive material, and vinylidene polyfluoride (PVDF), polytetrafluoroethylene (PTFE) and the like are mentioned as a binding agent. These additives can be used in the same compounding ratio as in the conventional technique.

-Form of positive electrode-

The form of the positive electrode is not particularly limited, and can be properly selected from the well-known forms as the electrode. For example, there are mentioned a sheet, a column, a plate, a spiral form and so on.

<Production method of positive electrode for lithium primary cell>

The production method of the positive electrode for the lithium primary cell according to the invention is not particularly limited. For example, the positive electrode can be produced by the following method.

In the production method of the positive electrode for the lithium primary cell according to the invention, a paste is prepared by mixing and milling an active substance for positive electrode and a phosphazene derivative and/or an isomer of a phosphazene derivative as a first step. Moreover, the paste may be added with additives usually used in the technical field of the lithium primary cell such as electrically conductive material, binding agent and the like.

In a second step, the paste prepared in the first step is applied to a jig for the manufacture of the positive electrode. As the jig for the manufacture of the positive electrode can be used a jig usually used in the technical field of the lithium primary cell. For example, a doctor blade or the like is mentioned.

Then, the paste applied to the jig for the manufacture of the positive electrode is dried and shaped into a desired form to produce a positive electrode. The drying is preferable to be a hot drying at 100-120°C. Also, as the shaping method can be used the conventionally known method. For example, the paste applied to the jig for the manufacture of the positive electrode and dried can be punched out by a punching machine with a mold corresponding to an objective form of a positive electrode for the lithium primary cell.

In the positive electrode obtained by the above method, the phosphazene derivative and/or the isomer of the phosphazene derivative is closed between the particles of the active substance for positive electrode, so that the internal resistance of the cell itself is small as compared with the positive electrode consisting of only the active substance for positive electrode and hence it is a positive electrode for a lithium primary cell having high discharge capacity and energy density, a high output and a long service life.

<Lithium primary cell>

The lithium primary cell of the invention comprises the aforementioned positive electrode, a negative electrode, and an electrolyte comprising an aprotic organic solvent and a support salt, and includes members usually used in the technical filed of the lithium primary cell such as a separator and the like, if necessary.

-Negative electrode-

As a material of the negative electrode in the lithium primary cell of the invention, a lithium alloy and the like are mentioned in addition to a lithium metal itself. As a metal to be alloyed with lithium are mentioned Sn, Pb, Al, Au, Pt, In, Zn, Cd, Ag, Mg and so on. Among them, Al, Zn and Mg are preferable from a viewpoint of a great deposition

amount and a toxicity. These materials may be used alone or in a combination of two or more. The form of the negative electrode is not particularly limited, and can be properly selected from the same well-known ones as the aforementioned forms of the positive electrode.

-Electrolyte-

The electrolyte in the lithium primary cell of the invention comprises an aprotic organic solvent and a support salt. Since the negative electrode in the lithium primary cell is made of the lithium or lithium alloy as mentioned above, it is very high in the reactivity with water, so that the aprotic organic solvent not reacting with water is used as a solvent.

--Aprotic organic solvent--

The aprotic organic solvent is not particularly limited, but includes ether compounds, ester compounds and so on from a view point that the viscosity of the electrolyte is controlled to a low value. Concretely, there are mentioned 1,2-dimethoxyethane (DME), tetrahydrofuran, dimethyl carbonate, diethyl carbonate, diphenyl carbonate, ethylene carbonate, propylene carbonate (PC), γ-butyrolactone (GBL), γ-valerolactone, methylethyl carbonate, ethylmethyl carbonate and so on.

Among them, cyclic ester compounds such as propylene carbonate, γ-butyrolactone and the like, chain ester compounds such as dimethyl carbonate, methylethyl carbonate and the like, and chain ether compounds such as 1,2-dimethoxyethane and the like are preferable. Particularly, the cyclic ester compound is preferable in a point that the dielectric constant is high and the solubility to a support salt (lithium salt) mentioned later is excellent, and the chain ester compound and ether compound are preferable in a point that the viscosity is low and hence the viscosity of the electrolyte is made low. They may be used alone or in a combination of two or more.

--Support salt--

As the support salt may be used any salts usually used as an ion source for lithium ion. The ion source for lithium ion is not particularly limited, but there are preferably mentioned lithium salts such as $LiClO_4$, $LiBF_4$, $LiPF_6$, $LiCF_3SO_3$, $LiAsF_6$, $LiC_4F_9SO_3$, $Li(CF_3SO_2)_2N$, $Li(C_2F_5SO_2)_2N$ and so on. They may be used alone or in a combination of two or more.

The content of the support salt in the electrolyte is preferably 0.2-1 mol, more preferably 0.5-1 mol per 1L of a solvent component in the electrolyte. When the content is less than 0.2 mol, the sufficient electric conductivity of the electrolyte can not be ensured and hence the discharge characteristic of the cell may cause trouble. While, when it exceeds 1 mol, the viscosity of the electrolyte rises and the sufficient mobility of lithium ion can not be ensured, and hence the sufficient electric conductivity of the electrolyte can not be ensured as mentioned above and the solution resistance rises, and as a result, the pulse discharge and the low-temperature characteristic may cause trouble.

-Phosphazene derivative and/or isomer of phosphazene derivative-

The aprotic organic solvent is preferable to be added with a phosphazene derivative and/or an isomer of a phosphazene derivative.

In the invention, the reason why the phosphazene derivative and/or the isomer of the phosphazene derivative is added to the electrolyte is as follows. That is, the paste body comprising the active substance for positive electrode and the phosphazene derivative and/or the isomer of the phosphazene derivative is used as the positive electrode as previously mentioned, while the phosphazene derivative and/or the isomer of the phosphazene derivative is added to the electrolyte, whereby the internal resistance of the cell itself is lowered and hence the discharge capacity and energy density of the lithium primary cell can be improved by the lowering of the internal resistance, and hence there is obtained a lithium primary cell having a high output and a long service life.

In the conventional electrolyte based on the aprotic organic solvent for the lithium primary cell, when a large current violently flows in the short-circuiting to abnormally generate heat in the cell, it is a high risk that a gas is generated by vaporization-decomposition or the explosion-ignition of the cell is caused by the gas and heat generated, and also it is a high risk that sparks produced in the short-circuiting take fire in the electrolyte to cause the fire-ignition. If the phosphazene derivative and/or the isomer of the phosphazene derivative is included in the conventional electrolyte, the vaporization-decomposition or the like of the electrolyte at a relatively low temperature of not higher than about 200°C is controlled to reduce the risk of the ignition-explosion, and even if the fire is caused in the interior of the cell by fusion of the negative electrode material or the like, the risk of fire catching is low. Furthermore, phosphorus has an action of suppressing the chain decomposition of the high polymer material constituting the cell, so that the risk of the fire-ignition is effectively reduced. Moreover, if the phosphazene derivative and/or the isomer of the phosphazene

derivative is included in the conventional electrolyte, it is possible to provide a lithium primary cell having excellent low-temperature and high-temperature characteristics.

The phosphazene derivative and the isomer of the phosphazene derivative have a potential window enough to function as a primary cell, and is never decomposed by discharge. Also, the phosphazene derivative and the isomer of the phosphazene derivative containing a halogen (e.g. fluorine) functions as an agent catching an active radical in a bare case of combustion, while the phosphazene derivative and the isomer of the phosphazene derivative containing an organic substituent have an effect of shielding oxygen because a carbide (char) is produced on the electrode material and the separator in the combustion. In addition, even if the recharge is accidentally by a user, the phosphazene derivative and the isomer of the phosphazene derivative have an effect of suppressing the formation of dendrite, so that the safety becomes higher as compared with the system containing no phosphazene derivative and the isomer thereof.

In the invention, the risk of fire-ignition is evaluated by the measurement of oxygen index according to JIS K7201. Moreover, the oxygen index means a value of minimum oxygen concentration represented by a volume percentage required for maintaining combustion of a material under given test conditions defined in JIS K7201, in which the lower the oxygen index, the higher the risk of fire-ignition, and the higher the oxygen index, the lower the risk of fire-ignition. In the invention, the risk of fire-ignition is evaluated by a limit oxygen index according to the above oxygen index.

The electrolyte added with the phosphazene derivative and/or the isomer of the phosphazene derivative is preferable to have a limit oxygen index of not less than 21 volume%. When the limit oxygen index is less than 21 volume%, the effect of suppressing the fire-ignition is not sufficient. Since the oxygen index is 20.2 volume% under an atmospheric condition, the limit oxygen index of 20.2 volume% means that combustion occurs in the atmosphere. The inventors have made various studies and found that the self-extinguishing property is developed at the limit oxygen index of not less than 21% by volume, and the flame retardance is developed at not less than 23% by volume, and the incombustibility is developed at not less than 25% by volume.

Moreover, the terms "self-extinguishing property, flame retardance, incombustibility" used herein are defined in the method according to UL 94HB method, wherein when a test piece of 127 mm x 12.7 mm is prepared by impregnating an electrolyte into an incombustible quartz fiber and is ignited under atmospheric environment, the self-extinguishing property indicates a case that the ignited flame is extinguished in a line between 25 mm and 100 mm and an object fallen down from a net is not fired, and the flame retardance indicates a case that the ignited flame does not arrive at a line of 25 mm of the apparatus and the object fallen down from the net is not fired, and the incombustibility indicates a case that no ignition is observed (combustion length: 0 mm).

In the invention, the phosphazene derivative and/or the isomer of the phosphazene derivative included in the paste body constituting the positive electrode may be the same as or different from the phosphazene derivative and/or the isomer of the phosphazene derivative added to the aprotic organic solvent constituting the electrolyte.

As the phosphazene derivative added to the aprotic organic solvent, a phosphazene derivative having a viscosity at 25°C of not more than 100 mPa · s (100 cP), preferably not more than 20 mPa · s (20 cP) and represented by the formula (I) or (II) is preferable from a viewpoint that the viscosity is low and the support salt is well dissolved. When the viscosity is exceeds mPa · s (100 cP), the dissolution of the support salt is difficult and the wettability to the positive electrode material, the separator or the like lowers, and also the ion conductivity is considerably lowered due to the increase of the viscous resistance of the electrolyte, and particularly the performances are lacking in the use under a lower temperature condition below the freezing point.

Although $R^1$, $R^2$ and $R^3$ in the formula (I) are mentioned above, the alkoxy group is preferable in a point that the viscosity of the electrolyte can be made low. As the alkoxy group are mentioned the aforementioned alkoxy groups. Among them, methoxy group or ethoxy group is particularly preferable as all of $R^1$-$R^3$ from a viewpoint of the low viscosity and high dielectric constant.

Although the groups of $Y^{10}$-$Y^{14}$ in the formulae (VIII), (IX) and (X) are mentioned above, the group containing sulfur and/or selenium is particularly preferable as the group of $Y^{10}$-$Y^{14}$ because the risk of fire-ignition in the electrolyte is reduced.

Although $Z^1$ in the formula (VIII) is mentioned above, the bivalent group containing sulfur and/or selenium is particularly preferable as $Z^1$ because the risk of fire-ignition in the electrolyte is reduced.

Among the substituents in the formulae (VIII)-(X), the substituent containing phosphorus as shown by the formula (VIII) is particularly preferable in a point that the risk of fire-ignition can be reduced effectively. Also, the substituent containing sulfur as shown by the formula (IX) is particularly preferable in a point that the internal resistance of the cell itself can be reduced.

Although $R^4$ in the formula (II) is mentioned above, the alkoxy group is preferable in a point that the viscosity of the electrolyte can be made low.

By properly selecting $R^1$-$R^4$, $R^{10}$-$R^{14}$, $Y^1$- $Y^3$,$Y^{10}$-$Y^{14}$ and $Z^1$ in the formulae (I), (II) and (VIII)-(X), it is made possible to synthesize a phosphazene derivative having a more preferable viscosity and a solubility suitable for addition

and mixing as the phosphazene derivative to be added to the aprotic organic solvent.

Among the phosphazene derivatives represented by the formula (II), a phosphazene derivative represented by the formula (III) is particularly preferable as the phosphazene derivative to be added to the aprotic organic solvent from a viewpoint that the viscosity of the electrolyte is made low to improve the low-temperature characteristic of the cell and further improve the deterioration resistance and safety of the electrolyte.

The phosphazene derivative of the formula (III) is a liquid of a low viscosity at room temperature (25°C) and has an action of dropping the solidifying point. For this end, by adding such a phosphazene derivative to the electrolyte, it is possible to give an excellent low-temperature characteristic to the electrolyte, and also it is possible to attain the low viscosity of the electrolyte to provide a lithium primary cell having a low internal resistance and a high electric conductivity. Therefore, it is possible to provide a lithium primary cell developing an excellent discharge characteristic over a long period even in the use under low temperature conditions at low-temperature area or season.

In the formula (III), n is preferable to be 3-4, particularly 3 in a point that the excellent low-temperature characteristic can be given to the electrolyte and the viscosity of the electrolyte can be made low. When the value of n is small, the boiling point is low and the ignition-preventing property in the approaching to flame can be improved. On the other hand, as the value of n becomes large, the boiling point becomes high and it can be stably used even at a high temperature. In order to obtain target performances by utilizing the above nature, it is possible to properly select and use plural phosphazene derivatives.

By properly selecting the value of n in the formula (III) can be prepared an electrolyte having a more preferable viscosity, a solubility suitable for mixing, a low-temperature characteristic and the like. such phosphazene derivatives may be used alone or in a combination of two or more.

The viscosity of the phosphazene derivative of the formula (III) added to the aprotic organic solvent is not particularly limited unless it is not more than 20 mPa · s (20 cP), but is preferably not more than 10 mPa · s (10 cP), more preferably not more than 5 mPa · s (5 cP) from a viewpoint of the improvement of the electrical conduction and the improvement of the low-temperature characteristic.

Among the phosphazene derivatives of the formula (II), a phosphazene derivative represented by the formula (IV) is particularly preferable as the phosphazene derivative to be added to the aprotic organic solvent from a viewpoint of the improvements of the deterioration resistance and safety of the electrolyte.

In case of including the phosphazene derivative of the formula (II), the safety of the electrolyte can be improved, but it is possible to give a more excellent safety to the electrolyte by including a phosphazene derivative in which at least one of all $R^5$s in the formula (IV) is a monovalent substituent containing fluorine. Furthermore, it is possible to provide a further excellent safety by including a phosphazene derivative in which at least one of all $R^5$s in the formula (IV) is fluorine. That is, the phosphazene derivative in which at least one of all $R^5$s in the formula (IV) is a fluorine-containing monovalent substituent or fluorine has an effect of hardly burning the electrolyte as compared with the phosphazene derivative containing no fluorine and can give the more excellent safety to the electrolyte.

Although $R^5$ in the formula (IV) is mentioned above, the alkoxy group is preferable in a point that the improvement of the safety in the electrolyte is excellent. As the alkoxy group are mentioned aforementioned alkoxy groups, and among them methoxy group, ethoxy group and n-propoxy group are particularly preferable in view that the improvement of the safety in the electrolyte is excellent. Also, methoxy group is preferable in a point that the viscosity of the electrolyte is made low.

In the formula (IV), n is preferable to be 3-4 in a point that the excellent safety can be given to the electrolyte.

Although the content of fluorine in the phosphazene derivative of the formula (IV) has been previously mentioned, when the content is within the aforementioned range, the effect inherent to the invention of "excellent safety" can be developed preferably.

By properly selecting $R^5$ and n in the formula (IV), it is possible to prepare an electrolyte having more preferable safety and viscosity, a solubility suitable for mixing and the like. Such phosphazene derivatives may be used alone or in a combination of two or more.

The viscosity of the phosphazene derivative of the formula (IV) is not particularly limited unless it is not more than 20 mPa · s (20 cP), but is preferably not more than 10 mPa · s (10 cP), more preferably not more than 5 mPa · s (5 cP) from a viewpoint of the improvement of the electrical conduction and the improvement of the low-temperature characteristic.

As the phosphazene derivative to be added to the aprotic organic solvent, a phosphazene derivative of the formula (V) is preferable to be a solid at room temperature (25°C) from a viewpoint that the deterioration resistance of the electrolyte is improved while suppressing the rise of the viscosity of the electrolyte to thereby give the self-extinguishing property or flame retardance to the electrolyte.

Since the phosphazene derivative of the formula (V) is a solid at room temperature (25°C), when it is added to the electrolyte, it is dissolved in the electrolyte to raise the viscosity of the electrolyte. However, in case of the given addition amount as mentioned later, the rising rate of the viscosity of the electrolyte is low and a lithium primary cell having a low internal resistance and a high electric conductivity is provided. In addition, since the phosphazene derivative of the formula (V) is dissolved in the electrolyte, the stability of the electrolyte is excellent over a long period. On the other hand, when it is added in an amount exceeding the given value, the viscosity of the electrolyte becomes considerably large, and the internal resistance is high and the electric conductivity is low, and hence the use as the lithium primary cell becomes impossible.

As to $R^6$ of the formula (V), there are ones as mentioned above, but the alkoxy group is preferable in a point that the rise of the viscosity of the electrolyte can be suppressed. As the alkoxy group are mentioned the aforementioned alkoxy groups. Among them, methoxy group, ethoxy group, propoxy group (isopropoxy group, n-propoxy group), phenoxy group and trifluoroethoxy group are more preferable in a point that the rise of the viscosity of the electrolyte can be suppressed.

In the formula (V), n is particularly preferable to be 3 or 4 in a point that the rise of the viscosity of the electrolyte can be suppressed.

As the phosphazene derivative of the formula (V), a structure of the formula (V) that $R^6$ is methoxy group and n is 3, a structure of the formula (V) that $R^6$ is at least either methoxy group or phenoxy group and n is 4, a structure of the formula (V) that $R^6$ is ethoxy group and n is 4, a structure of the formula (V) that $R^6$ is isopropoxy group and n is 3 or 4, a structure of the formula (V) that $R^6$ is n-propoxy group and n is 4, a structure of the formula (V) that $R^6$ is trifluoroethoxy group and n is 3 or 4, and a structure of the formula (V) that $R^6$ is phenoxy group and n is 3 or 4 are particularly preferable as the phosphazene derivative to be added to the aprotic organic solvent in a point that the rise of the viscosity of the electrolyte can be suppressed.

By properly selecting each substituent and value of n in the formula (V), it is possible to prepare an electrolyte having a more preferable viscosity, a solubility suitable for mixing and the like. Such phosphazene derivatives may be used alone or in a combination of two or more.

The isomer of the phosphazene derivative to be added to the aprotic organic solvent is not particularly limited, but an isomer represented by the formula (VI) and of a phosphazene derivative of the formula (VII) is preferable from a viewpoint that the low-temperature characteristic of the lithium primary cell is considerably improved to give a self-extinguishing property or flame retardance to the electrolyte and further improve the deterioration resistance of the electrolyte.

Although $R^7$, $R^8$ and $R^9$ in the formula (VI) are mentioned above, fluorine and alkoxy group are particularly preferable in view of the low-temperature characteristic and the electrochemical stability of the electrolyte. Also, fluorine, alkoxy group and fluorine-containing alkoxy group are preferable in a point that the viscosity of the electrolyte is made low. As the alkoxy group are mentioned the aforementioned alkoxy groups. Among them, all of $R^7$-$R^9$ are particularly preferable to be methoxy group or ethoxy group from a viewpoint of low viscosity and high dielectric constant.

Although $Y^7$ and $Y^8$ in the formula (VI) are mentioned above, the bivalent connecting group containing sulfur and/or oxygen, oxygen element and sulfur element are particularly preferable in a point that the flame retardance of the electrolyte is improved, and the oxygen-containing bivalent connecting group and oxygen element are particularly preferable in a point that the low-temperature characteristic of the electrolyte is excellent.

Although $Y^{15}$-$Y^{19}$ in the formulae (XI), (XII) and (XIII) are mentioned above, it is particularly preferable that the groups of $Y^{15}Y^{19}$ are the bivalent connecting group containing sulfur and/or oxygen, oxygen element or sulfur element because the flame retardance of the electrolyte is improved. Also, the oxygen-containing bivalent connecting group and oxygen element are preferable in a point that the low-temperature characteristic of the electrolyte is excellent.

Although $Z^2$ in the formula (XI) is mentioned above, it is particularly preferable that $Z^2$ is a bivalent group containing sulfur and/or selenium, sulfur element or selenium element because the flame retardance of the electrolyte is improved. Also, the oxygen-containing bivalent group and oxygen element are particularly preferable in a point that the low-temperature characteristic of the electrolyte is excellent.

Among the substituents shown by the formulae (XI)-(XIII), a phosphorus-containing substituent as shown by the formula (XI) is particularly preferable in a point that the self-extinguishing property to the flame retardance can be developed effectively. Also, a sulfur-containing substituent as shown by the formula (XII) is particularly preferable in a point that the interfacial resistance of the electrolyte is made small.

By properly selecting $R^7$-$R^9$, $R^{15}$-$R^{19}$, $Y^7$-$Y^8$, $Y^{15}$-$Y^{19}$ and $Z^2$ in the formulae (VI) and (XI)-(XIII), it is possible to prepare an electrolyte having a more preferable viscosity, a solubility for addition and mixing, a low-temperature characteristic and the like. Such compounds may be used alone or in a combination of two or more.

Although the phosphazene derivative of the formula (VII) is mentioned above, ones having a relatively low viscosity and capable of well dissolving the support salt are preferable as the phosphazene derivative to be added to the aprotic organic solvent.

As the phosphazene derivative of the formula (I), (II), (V) or (VII) or the isomer of the formula (VI), ones having a halogen-containing substituent in their molecular structure are preferable for adding to the aprotic organic solvent. When the halogen-containing substituent is existent in the molecular structure, even if the content of the phosphazene derivative or the isomer is small, it is possible to effectively reduce the risk of fire-ignition in the electrolyte by a halogen gas derived. Moreover, the occurrence of halogen radical comes into problem in the compound having a halogen-containing substituent, but the phosphazene derivative or the isomer of the phosphazene derivative used in the invention does not cause such a problem because phosphorus element in the molecular structure catches the halogen radical to form a stable phosphorus halide.

The content of the halogen element in the phosphazene derivative and the isomer of the phosphazene derivative is preferably 2-80% by weight, more preferably 2-60% by weight, further preferably 2-50% by weight. When the content is less than 2% by weight, the effect by the inclusion of the halogen element may not be sufficiently developed, while when it exceeds 80% by weight, the viscosity becomes higher and the electric conductivity may lower in the addition to the electrolyte. As the halogen element, fluorine, chlorine, bromine and the like are preferable, and fluorine is particularly preferable from a viewpoint of the provision of good cell characteristics.

A flash point of the phosphazene derivatives represented by the formulae (I), (II), (IV), (V) and (VII) is not particularly limited, but it is preferably not lower than 100°C, more preferably not lower than 150°C, further preferably not lower than 300°C from a viewpoint of the fire control and the like. On the other hand, the phosphazene derivative of the formula (III) has no flash point. The term "flash point" used herein concretely means a temperature that the flame is widened on a surface of a mass to cover at least 75% of the mass surface. The flash point is a measure observing a tendency of forming a combustible mixture with air. As the phosphazene derivative has a flash point above 100°C or has not a flash point, the fire or the like is suppressed, and also even if the fire or the like is caused in the interior of the cell, it is possible to lower the risk that it is ignited to outblaze on the surface of the electrolyte.

By adding the phosphazene derivative of the formula (III) or (V) or the isomer of the formula (VI) and the phosphazene derivative of the formula (VII), the decomposition of the support salt is suppressed to considerably stabilize the electrolyte. In the electrolyte comprising the ester based organic solvent, which is used in the conventional lithium primary cell, and the support salt as a lithium ion source, the support salt is decomposed with the lapse of time and the resulting decomposed product reacts with a slight amount of water existing in the organic solvent or the like and hence there may be caused a case of lowering the electrical conductivity of the electrolyte or deteriorating the electrode material. In this case, $LiCF_3SO_3$, $Li(C_2F_5SO_2)_2N$, $Li(CF_3SO_2)_2N$, which have a low hydrolysis of the support salt itself, are particularly preferable though $LiBF_4$, $LiPF_6$, $LiCF_3SO_3$, $Li(C_2F_5SO_2)_2N$, $Li(CF_3SO_2)_2N$ and the like are usually used as a support salt. However, $LiBF_4$ and $LiPF_6$ mat be preferably used owing to the above action.

The contents of the phosphazene derivative and the isomer of the phosphazene derivative in the electrolyte are described below.

From a viewpoint of "limit oxygen index", the content of the phosphazene derivative of the formula (I) or (II) to the electrolyte is preferably not less than 5% by volume, more preferably not less than 10% by volume. By adjusting the content to the value of the above range is effectively reduced the risk of fire-ignition of the electrolyte. Moreover, the above range effectively reduces the risk of ignition but differs in accordance with the kind of the support salt and the kind of electrolyte used, so that it is optimized by properly determining the content so that the system is controlled to a lowest viscosity and the limit oxygen index is rendered into not less than 21 volume%.

From a viewpoint of "safety", the content of the phosphazene derivative of the formula (III) in the electrolyte is preferably not less than 5% by volume, and the content of the phosphazene derivative of the formula (IV) is preferably not less than 10% by volume, more preferably not less than 15% by volume. When the content is within the above range, the safety of the electrolyte can be preferably improved.

From a viewpoint of "self-extinguishing property", the content of the phosphazene derivative of the formula (V) is preferably not less than 20% by weight, and the total content of the isomer of the formula (VI) and the phosphazene derivative of the formula (VII) is preferably not less than 20% by volume. When the content is within the above range, the sufficient self-extinguishing property can be developed in the electrolyte.

From a viewpoint of "flame retardance", the content of the phosphazene derivative of the formula (V) is preferably not less than 30% by weight, and the total content of the isomer of the formula (VI) and the phosphazene derivative of the formula (VII) is preferably not less than 30% by volume. When the content is within the above range, the sufficient flame retardance can be developed in the electrolyte.

From a viewpoint of "low-temperature characteristic", the content of the phosphazene derivative of the formula (III) in the electrolyte is preferably not less than 1% by volume, more preferably not less than 3% by volume, further preferably not less than 5% by volume, and the total content of the isomer of the formula (VI) and the phosphazene derivative of the formula (VII) is preferably not less than 1% by volume, more preferably not less than 2% by volume, further preferably not less than 5% by volume. When the content is less than 1% by volume, the low-temperature characteristic of the electrolyte is not sufficient.

From a viewpoint of "deterioration resistance", the content of the phosphazene derivative of the formula (III) in the electrolyte is preferably not less than 2% by volume, more preferably not less than 3% by volume, and the content of the phosphazene derivative of the formula (IV) is preferably not less than 2% by volume, more preferably not less than 3% by volume, and the content of the phosphazene derivative of the formula (V) is preferably not less than 2% by volume, and the total content of the isomer of the formula (VI) and the phosphazene derivative of the formula (VII) is preferably not less than 2% by volume, more preferably not less than 3% by volume. When the content is within the

above range, the deterioration of the electrolyte can be preferably suppressed.

From a viewpoint of "lowering of viscosity", the content of the phosphazene derivative of the formula (III) in the electrolyte is preferably not less than 3% by volume when being included in an electrolyte having a viscosity higher than that of this phosphazene derivative, and preferably 3-80% by volume, more preferably 3-50% by volume when being included in an electrolyte having a viscosity lower than that of this phosphazene derivative.

From a viewpoint of "control of viscosity rise", the content of the phosphazene derivative of the formula (V) in the electrolyte is preferably not more than 40% by weight, more preferably not more than 35% by weight, further preferably not more than 30% by weight. When the content exceeds 40% by weight, the viscosity rise of the electrolyte becomes remarkably large and the internal resistance is high and the electric conductivity becomes undesirably low.

From viewpoints of "safety", "self-extinguishing property" and "flame retardance", a case of including the cyclic phosphazene derivative of the formula (IV) or (V), or the isomer of the formula (VI) and the phosphazene derivative of the formula (VII) and $LiBF_4$ or $LiCF_3SO_3$, and γ-butyrolactone and/or propylene carbonate is particularly preferable as the electrolyte. In this case, even if the content is small, the safety, self-extinguishing property and flame retardance are very high irrespectively of the aforementioned description.

That is, the content of the cyclic phosphazene derivative of the formula (IV) in the electrolyte is preferably not less than 5% by volume in order to particularly develop the excellent safety. Also, the content of the cyclic phosphazene derivative of the formula (V) in the electrolyte is preferably 5-10% by weight in case of including $LiBF_4$ in order to develop the self-extinguishing property and preferably more than 10% by weight in order to develop the flame retardance, and preferably 5-25% by weight in case of including $LiCF_3SO_3$ in order to develop the self-extinguishing property and preferably more than 25% by weight in order to develop the flame retardance. Furthermore, the total content of the isomer of the formula (VI) and the phosphazene derivative of the formula (VII) in the electrolyte is preferably 1.5-10% by volume in case of including $LiBF_4$ in order to develop the self-extinguishing property and preferably more than 10% by volume in order to develop the flame retardance, and preferably 2.5-15% by volume in case of including $LiCF_3SO_3$ in order to develop the self-extinguishing property and preferably more than 15% by volume in order to develop the flame retardance. Moreover, if it is intended to use at a high temperature, a case of including $Li(C_2F_5SO_2)_2N$, $Li(CF_3SO_2)_2N$ and $LiBF_4$ as a support salt is also preferable.

-Other members-

As the other member used in the lithium primary cell of the invention is mentioned a separator interposing between the positive and negative electrodes in the lithium primary cell for preventing the short-circuiting of current due to the contact of both electrodes. As a material of the separator is preferably mentioned a material capable of surely preventing the contact of both electrodes and passing or including the electrolyte such as non-woven fabric, thin-layer film or the like made of a synthetic resin such as polytetrafluoroethylene, polypropylene, polyethylene, cellulose base, polybutylene terephthalate, polyethylene terephthalate or the like. Among them, a microporous film of polypropylene or polyethylene having a thickness of about 20-50 μm and a film of cellulose base, polybutylene terephthalate, polyethylene terephthalate or the like are particularly preferable.

In the invention, various known members usually used in the cell can be preferably used in addition to the separator.

-Form of lithium primary cell-

The form of the aforementioned lithium primary cell according to the invention is not particularly limited, and preferably includes various known forms such as cylindrical cells of coin type, button type, paper type, rectangular or spiral structure and the like. In case of button type, a lithium primary cell can be prepared by providing sheet-shaped positive electrode and negative electrode, and sandwiching a separator between the positive and negative electrodes and the like. In case of spiral structure, a lithium primary cell can be prepared by providing sheet-shaped positive electrodes, sandwiching a collector therebetween, piling a negative electrode (sheet-shaped) thereon and winding them and the like.

The following examples are given in illustration of the invention and are not intended as limitations thereof.

(Example 1)

A positive electrode for a lithium primary cell is prepared by the following method. A paste is prepared by mixing and kneading 20 mg of electrochemically synthesized manganese dioxide made by Toso Co., Ltd., 0.1 mL of a phosphazene derivative A (a cyclic phosphazene derivative compound of the formula (IV) in which n is 3 and two of six $R^5$s are ethoxy group and the remaining four are fluorine, viscosity at 25°C: 1.2 mPa · s (1.2 cP)), 12.5 mg of acetylene black and 1.2 mg of polyvinylidene fluoride in air for 30 minutes. Then, the paste is applied through a doctor

blade and dried with hot air (100-120°C) and then cut out by a punching machine of φ16 mm to prepare a positive electrode for the lithium primary cell.

By using such a positive electrode is prepared a lithium primary cell as follows. Moreover, a lithium foil (thickness 0.5 mm) is punched out into φ16 mm and used as a negative electrode, and a nickel foil is used as a collector. Also, an electrolyte is prepared by dissolving $LiCF_3SO_3$ at a concentration of 0.75 mol/L (M) in a mixed solution of 50 volume% of propylene carbonate (PC) and 50 volume% of dimethoxyethane (DME). As a separator is used a polyethylene separator made by Tonen-Sha, through which the positive and negative electrodes are opposed and the above electrolyte is poured therein and sealed to prepare a CR2016 type lithium primary cell.

After an initial cell voltage at 20°C is measured and evaluated with respect to the thus obtained cell, average discharge potential, discharge capacity at room temperature and energy density are measured and evaluated by the following evaluation methods. These results are shown in Table 1.

-Evaluation of average discharge potential-

The average discharge potential is measured as follows. In a discharge curve obtained by discharging to the positive electrode material under a condition of 0.2C, a potential keeping a flatness is measured as an average discharge potential.

-Evaluation of discharge capacity at room temperature-

The discharge capacity is measured by conducting the discharge of 0.2C at a lower limit voltage of 1.5 V under an environment of 20°C.

-Evaluation of energy density-

The energy density is determined by calculating a discharge capacity per unit weight from the above discharge capacity at room temperature.

-Evaluation of internal resistance of cell-

The measurement of the internal resistance of the cell is carried out by using a complex impedance measuring apparatus (impedance analyzer SI 1260 and electrical interface SI 1287, made by Toyu Technica Co., Ltd.), measuring a resistance component (R) and a capacity component (C) at each frequency (f) within a frequency range of $0.1\text{-}10^6$ Hz and plotting complex impedances when an abscissa is Z'(Ω) (= R) and an ordinate is Z" (= 1/2πfC). Moreover, Z' (Ω) at f = 1 kHz (real number term, hereinafter referred to as 1 KHz Z'(Ω)) is frequently evaluated as an internal resistance of a cell itself, so that 1 kHz Z'(Ω) in the cells of the examples and comparative examples are evaluated as the internal resistance of the cell itself.

(Example 2)

A positive electrode is prepared in the same manner as in Example 1 except that a phosphazene derivative B (a cyclic phosphazene derivative of the formula (IV) in which n is 3 and one of six $R^5$s is ethoxy group and the remaining five are fluorine, viscosity at 25°C: 1.2 mPa · s (1.2 cP)) is used instead of the phosphazene derivative A, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Example 3)

A positive electrode is prepared in the same manner as in Example 1 except that a phosphazene derivative C (a cyclic phosphazene derivative of the formula (IV) in which n is 3 and one of six $R^5$s is methoxy group and the remaining five are fluorine, viscosity at 25°C: 1.8 mPa · s (1.8 cP)) is used instead of the phosphazene derivative A, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Example 4)

A positive electrode is prepared in the same manner as in Example 1 except that a phosphazene derivative D (a cyclic phosphazene derivative of the formula (IV) in which n is 3 and one of six $R^5$s is n-propoxy group and the remaining five are fluorine, viscosity at 25°C: 1.1 mPa · s (1.1 cP)) is used instead of the phosphazene derivative A, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Example 5)

A positive electrode is prepared in the same manner as in Example 1 except that a phosphazene derivative E (a cyclic phosphazene derivative of the formula (IV) in which n is 3 and two of six $R^5$s are $OCH_2CF_3$ and the remaining four are fluorine, viscosity at 25°C: 3.2 mPa · s (3.2 cP)) is used instead of the phosphazene derivative A, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Example 6)

A positive electrode is prepared in the same manner as in Example 1 except that a phosphazene derivative F (a chain phosphazene derivative of the formula (I) in which $Y^1$-$Y^3$ are O (oxygen), $R^1$-$R^3$ are $CH_2CF_3$ and $X^1$ is $P(O)(OCH_2CF_3)_2$, viscosity at 25°C: 18.9 mPa · s (18.9 cP)) is used instead of the phosphazene derivative A, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Example 7)

A positive electrode is prepared in the same manner as in Example 1 except that a phosphazene derivative G (a chain phosphazene derivative of the formula (I) in which $Y^1$-$Y^3$ are O (oxygen), $R^1$-$R^3$ are $CH_2CH_3$ and $X^1$ is $P(O)(OCH_2CH_3)$, viscosity at 25°C: 5.8 mPa · s (5.8 cP)) is used instead of the phosphazene derivative A, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Conventional Example 1)

A positive electrode is prepared in the same manner as in Example 1 except that the phosphazene derivative A is not used, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Example 8)

A positive electrode is prepared in the same manner as in Example 1 except that graphite fluoride made by Daikin Co., Ltd. is used instead of the electrochemically synthesized manganese dioxide made by Toso Co., Ltd., and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

(Examples 9-14)

A positive electrode is prepared in the same manner as in Example 8 except that each of phosphazenes shown in Table 1 is used instead of the phosphazene derivative A, and then a lithium primary cell is prepared. With respect to the thus obtained lithium primary cells, the initial voltage, average discharge potential, 1 kHz Z'(Ω), discharge capacity and energy density are measured in the same manner as in Example 1 to obtain results shown in Table 1.

(Conventional Example 2)

A positive electrode is prepared in the same manner as in Example 8 except that the phosphazene derivative A is not used, and then a lithium primary cell is prepared. With respect to the thus obtained lithium primary cell, the initial voltage, average discharge potential, 1 kHz Z'(Ω), discharge capacity and energy density are measured in the same manner as in Example 1 to obtain results shown in Table 1.

Table 1

| | Positive electrode material | | Cell characteristics | | | | |
|---|---|---|---|---|---|---|---|
| | Active substance for positive electrode | Phosphazene derivative | Initial voltage (V) | Average discharge potential (V) | 1 kHz Z' (Ω) | Discharge capacity (mAh/g) | Energy density (Wh/kg) |
| Example 1 | $MnO_2$ | phosphazene A | 3.47 | 2.90 | 35.5 | 290 | 772 |
| Example 2 | $MnO_2$ | phosphazene B | 3.48 | 2.90 | 34.5 | 292 | 780 |
| Example 3 | $MnO_2$ | phosphazene C | 3.47 | 2.90 | 35.0 | 290 | 770 |
| Example 4 | $MnO_2$ | phosphazene D | 3.47 | 2.90 | 34.0 | 294 | 788 |
| Example 5 | $MnO_2$ | phosphazene E | 3.48 | 2.90 | 35.2 | 290 | 772 |
| Example 6 | $MnO_2$ | phosphazene F | 3.47 | 2.90 | 36.3 | 285 | 753 |
| Example 7 | $MnO_2$ | phosphazene G | 3.47 | 2.90 | 36.4 | 285 | 752 |
| Conventional Example 1 | $MnO_2$ | none | 3.45 | 2.85 | 45.0 | 278 | 739 |
| Example 8 | $(CF_x)_n$ | phosphazene A | 3.30 | 2.42 | 85.0 | 230 | 590 |
| Example 9 | $(CF_x)_n$ | phosphazene B | 3.31 | 2.41 | 84.0 | 231 | 592 |
| Example 10 | $(CF_x)_n$ | phosphazene C | 3.28 | 2.40 | 86.5 | 235 | 580 |
| Example 11 | $(CF_x)_n$ | phosphazene D | 3.32 | 2.42 | 83.5 | 232 | 594 |
| Example 12 | $(CF_x)_n$ | phosphazene E | 3.33 | 2.43 | 83.0 | 225 | 580 |
| Example 13 | $(CF_x)_n$ | phosphazene F | 3.27 | 2.40 | 87.0 | 223 | 576 |
| Example 14 | $(CF_x)_n$ | phosphazene G | 3.29 | 2.39 | 86.0 | 227 | 584 |
| Conventional Example 2 | $(CF_x)_n$ | none | 3.10 | 2.30 | 150.0 | 210 | 550 |

As seen from Table 1, the internal resistance of the cell itself is lowered and the discharge capacity and energy density are improved by mixing and kneading the phosphazene derivative with the active substance for positive electrode to prepare the positive electrode.

(Example 15)

A positive electrode is prepared in the same manner as in Example 1. Also, an electrolyte is prepared by dissolving $LiCF_3SO_3$ (lithium salt) at a concentration of 0.75 mol/L (M) in a mixed solution of 10 volume% of the phosphazene derivative A (a cyclic phosphazene derivative compound of the formula (IV) in which n is 3 and two of six $R^5$s are ethoxy group and the remaining four are fluorine, viscosity at 25°C: 1.2 mPa · s (1.2 cP)), 45 volume% of propylene carbonate (PC) and 45 volume% of dimethoxyethane (DME). A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured according to JIS K7201. The results are shown in Table 2.

(Example 16)

A positive electrode is prepared in the same manner as in Example 1. Also, an electrolyte is prepared by dissolving $LiCF_3SO_3$ (lithium salt) at a concentration of 0.75 mol/L (M) in a mixed solution of 10 volume% of the phosphazene derivative D (a cyclic phosphazene derivative compound of the formula (IV) in which n is 3 and one of six $R^5$s is n-propoxy group and the remaining five are fluorine, viscosity at 25°C: 1.1 mPa · s (1.1 cP)), 45 volume% of propylene carbonate (PC) and 45 volume% of dimethoxyethane (DME). A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 17)

A positive electrode is prepared in the same manner as in Example 1 except that a phosphazene derivative E (a cyclic phosphazene derivative of the formula (IV) in which n is 3 and two of six $R^5$s are $OCH_2CF_3$ and the remaining four are fluorine, viscosity at 25°C: 3.2 mPa · s (3.2 cP)) is used instead of the phosphazene derivative A. Also, an electrolyte is prepared by dissolving LiBF4 (lithium salt) at a concentration of 0.75 mol/L (M) in a mixed solution of 10 volume% of the phosphazene derivative E and 90 volume% of γ-butyrolactone (GBL). A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 18)

A lithium primary cell is prepared in the same manner as in Example 17 except that $Li(C_2F_5SO_2)_2N$ is used instead of $LiBF_4$. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 19)

A positive electrode is prepared in the same manner as in Example 17. Also, an electrolyte is prepared in the same manner as in Example 17 except that the phosphazene derivative H (a cyclic phosphazene derivative compound of the formula (IV) in which n is 3 and two of six $R^5$s are n-propoxy group and the remaining four are fluorine, viscosity at 25°C: 1.2 mPa · s (1.2 cP)) is used instead of the phosphazene derivative E. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 20)

A positive electrode is prepared in the same manner as in Example 17. Also, an electrolyte is prepared in the same manner as in Example 17 except that the phosphazene derivative F (a chain phosphazene derivative compound

of the formula (I) in which $Y^1$-$Y^3$ are O (oxygen), $R^1$-$R^3$ are $CH_2CF_3$ and $X^1$ is $P(O)(OCH_2CF_3)_2$, viscosity at 25°C: 18.9 mPa · s (18.9 cP)) is used instead of the phosphazene derivative E. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 21)

A positive electrode is prepared in the same manner as in Example 1 except that the phosphazene derivative F is used instead of the phosphazene derivative A. Also, an electrolyte is prepared in the same manner as in Example 20. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 22)

A positive electrode is prepared in the same manner as in Example 17. Also, an electrolyte is prepared in the same manner as in Example 17 except that the phosphazene derivative G (a chain phosphazene derivative compound of the formula (I) in which $Y^1$-$Y^3$ are O (oxygen), $R^1$-$R^3$ are $CH_2CH_3$ and $X^1$ is $P(O)(OCH_2CH_3)_2$, viscosity at 25°C: 5.8 mPa · s (5.8 cP)) is used instead of the phosphazene derivative E. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 23)

A positive electrode is prepared in the same manner as in Example 17. Also, an electrolyte is prepared by dissolving $LiBF_4$ (lithium salt) at a concentration of 0.75 mol/L (M) in a mixed solution of 10 volume% of the phosphazene derivative E and 90 volume% of propylene carbonate (PC). A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 24)

A positive electrode is prepared in the same manner as in Example 17. Also, an electrolyte is prepared in the same manner as in Example 23 except that the phosphazene derivative H is used instead of the phosphazene derivative E. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Conventional Example 1)

The limit oxygen index of the electrolyte used in the above Conventional Example 1 is measured in the same manner as in Example 15. The result is shown in Table 2.

(Conventional Example 3)

A positive electrode is prepared in the same manner as in Conventional Example 1. Also, an electrolyte is prepared in the same manner as in Example 15. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15.

The results are shown in Table 2.

(Conventional Example 4)

A positive electrode is prepared in the same manner as in Conventional Example 1. Also, an electrolyte is prepared in the same manner as in Example 17 except that the phosphazene derivative E is not added. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Conventional Example 5)

A positive electrode is prepared in the same manner as in Conventional Example 1. Also, an electrolyte is prepared in the same manner as in Example 17. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Conventional Example 6)

A positive electrode is prepared in the same manner as in Conventional Example 1. Also, an electrolyte is prepared in the same manner as in Example 23 except that the phosphazene derivative E is not added. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Conventional Example 7)

A positive electrode is prepared in the same manner as in Conventional Example 1. Also, an electrolyte is prepared in the same manner as in Example 23. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 25)

A positive electrode is prepared in the same manner as in Example 1 except that graphite fluoride made by Daikin Co., Ltd. is used instead of the electrochemically synthesized manganese dioxide made by Toso Co., Ltd. and the phosphazene derivative E is used instead of the phosphazene derivative A. Also, an electrolyte is prepared in the same manner as in Example 17 except that the phosphazene derivative D is used instead of the phosphazene derivative E. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Example 26)

A positive electrode is prepared in the same manner as in Example 25. Also, an electrolyte is prepared in the same manner as in Example 17. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

(Conventional Example 2)

The limit oxygen index of the electrolyte used in the above Conventional Example 2 is measured in the same manner as in Example 15. The result is shown in Table 2.

(Conventional Example 8)

A positive electrode is prepared in the same manner as in Conventional Example 2. Also, an electrolyte is prepared in the same manner as in Example 25. A lithium primary cell is prepared in the same manner as in Example 1 by using the positive electrode and electrolyte. With respect to the thus obtained lithium primary cell, the initial voltage, average discharge potential, 1 kHz Z'(Ω), discharge capacity and energy density are measured in the same manner as in Example 1. Also, the limit oxygen index of the electrolyte is measured in the same manner as in Example 15. The results are shown in Table 2.

Table 2

| | Positive electrode material | | Electrolyte | | | | Cell characteristics | | | | |
|---|---|---|---|---|---|---|---|---|---|---|---|
| | Active substance for positive electrode | Phosphazene derivative | Aprotic organic solvent | Phosphazene derivative | Support salt | Limit oxygen index (vol%) | Initial voltage (V) | Average discharge potential (V) | 1 kHz Z' (Ω) | Discharge capacity (mAh/g) | Energy density (Wh/kg) |
| Example 15 | $MnO_2$ | phosphazene A | PC/DME=1/1 | phosphazene A | $LiCF_3SO_3$ | 22.0 | 3.47 | 2.90 | 32.2 | 295.0 | 790.0 |
| Example 16 | $MnO_2$ | phosphazene A | PC/DME=1/1 | phosphazene D | $LiCF_3SO_3$ | 25.0 | 3.47 | 2.90 | 32.2 | 295.0 | 790.0 |
| Example 17 | $MnO_2$ | phosphazene E | GBL | phosphazene E | $LiBF_4$ | 22.4 | 3.47 | 2.90 | 30.0 | 298.0 | 815.0 |
| Example 18 | $MnO_2$ | phosphazene E | GBL | phosphazene E | $Li(C_2F_5SO_2)_2N$ | 21.9 | 3.47 | 2.90 | 32.1 | 295.0 | 790.0 |
| Example 19 | $MnO_2$ | phosphazene E | GBL | phosphazene H | $LiBF_4$ | 23.8 | 3.47 | 2.90 | 32.1 | 295.0 | 790.0 |
| Example 20 | $MnO_2$ | phosphazene E | GBL | phosphazene F | $LiBF_4$ | 21.6 | 3.47 | 2.90 | 32.1 | 295.0 | 790.0 |
| Example 21 | $MnO_2$ | phosphazene F | GBL | phosphazene F | $LiBF_4$ | 21.6 | 3.47 | 2.90 | 32.1 | 295.0 | 790.0 |
| Example 22 | $MnO_2$ | phosphazene F | GBL | phosphazene G | $LiBF_4$ | 21.1 | 3.47 | 2.90 | 33.0 | 294.0 | 772.0 |
| Example 23 | $MnO_2$ | phosphazene E | PC | phosphazene E | $LiBF_4$ | 22.4 | 3.47 | 2.90 | 34.0 | 293.0 | 780.0 |
| Example 24 | $MnO_2$ | phosphazene E | PC | phosphazene H | $LiBF_4$ | 23.8 | 3.47 | 2.90 | 37.0 | 291.0 | 770.0 |
| Conventional Example 1 | $MnO_2$ | - | PC/DME=1/1 | - | $LiCF_3SO_3$ | 15.4 | 3.45 | 2.85 | 45.0 | 278.0 | 739.0 |
| Conventional Example 3 | $MnO_2$ | - | PC/DME=1/1 | phosphazene A | $LiCF_3SO_3$ | 22.0 | 3.47 | 2.90 | 35.5 | 290.0 | 772.0 |
| Conventional Example 4 | $MnO_2$ | - | GBL | - | $LiBF_4$ | 18.0 | 3.45 | 2.85 | 43.0 | 279.0 | 744.0 |
| Conventional Example 5 | $MnO_2$ | - | GBL | phosphazene E | $LiBF_4$ | 22.4 | 3.47 | 2.90 | 37.0 | 291.0 | 770.0 |
| Conventional Example 6 | $MnO_2$ | - | PC | - | $LiBF_4$ | 19.0 | 3.45 | 2.85 | 49.0 | 275.0 | 735.0 |
| Conventional Example 7 | $MnO_2$ | - | PC | phosphazene E | $LiBF_4$ | 22.4 | 3.47 | 2.90 | 40.0 | 285.0 | 752.0 |
| Example 25 | $(CF_x)_n$ | phosphazene E | GBL | phosphazene D | $LiBF_4$ | 25.0 | 3.15 | 2.32 | 90.0 | 228.0 | 586.0 |
| Example 26 | $(CF_x)_n$ | phosphazene E | GBL | phosphazene E | $LiBF_4$ | 22.4 | 3.15 | 2.32 | 95.0 | 226.0 | 582.0 |
| Conventional Example 2 | $(CF_x)_n$ | - | GBL | - | $LiBF_4$ | 18.0 | 3.10 | 2.30 | 150.0 | 210.0 | 550.0 |
| Conventional Example 8 | $(CF_x)_n$ | - | GBL | phosphazene D | $LiBF_4$ | 25.0 | 3.12 | 2.32 | 100.0 | 225.0 | 580.0 |

As seen from Table 2, by using the positive electrode made of the paste body containing the active substance for positive electrode and the phosphazene derivative and using the electrolyte added with the phosphazene derivative, the internal resistance of the cell itself is further lowered, and the discharge capacity and energy density are further improved, and the limit oxygen index of the electrolyte is raised to largely improve the safety.

INDUSTRIAL APPLICABILITY

According to the invention, there can be provided a positive electrode made of a paste body containing an active substance for positive electrode and a phosphazene derivative and/or an isomer of a phosphazene derivative, and a lithium primary cell having high discharge capacity and energy density and a high output and a long service life can be provided by using such a positive electrode.

Also, when the lithium primary cell is constructed by using a positive electrode made of a paste body containing an active substance for positive electrode and a phosphazene derivative and/or an isomer of a phosphazene derivative and an electrolyte added with a phosphazene derivative and/or an isomer of a phosphazene derivative, there can be provided a lithium primary cell having high discharge capacity and energy density and a high output and a long service life and a high safety.

## Claims

1. A positive electrode for a lithium primary cell comprising a paste body containing an active substance for positive electrode and a phosphazene derivative and/or an isomer of a phosphazene derivative.

2. A positive electrode for a lithium primary cell according to claim 1, wherein a total mass of the phosphazene derivative and/or the isomer of the phosphazene derivative is a mass corresponding to 0.01 to 100 times a mass of the active substance for positive electrode.

3. A positive electrode for a lithium primary cell according to claim 1 or 2, wherein the phosphazene derivative has a viscosity at 25°C of not more than 100 mPa · s (100 cP) and is represented by the following formula (I) or (II):

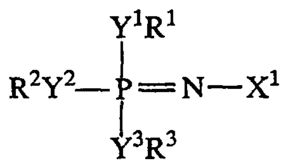

· · · · · (I)

(wherein $R^1$, $R^2$ and $R^3$ are independently a monovalent substituent or a halogen element; $X^1$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^1$, $Y^2$ and $Y^3$ are independently a bivalent connecting group, a bivalent element or a single bond)

$$(NPR^4{}_2)_n \qquad (II)$$

(wherein $R^4$ is independently a monovalent substituent or a halogen element; and n is 3 to 15).

4. A positive electrode for a lithium primary cell according to claim 3, wherein the phosphazene derivative of the formula (II) is represented by the following formula (III):

$$(NPF_2)_n \qquad (III)$$

(wherein n is 3 to 15).

5. A positive electrode for a lithium primary cell according to claim 3, wherein the phosphazene derivative of the formula (II) is represented by the following formula (IV):

$$(NPR^5{}_2)_n \qquad (IV)$$

(wherein $R^5$ is independently a monovalent substituent or a halogen element and at least one of all $R^5$s is a fluorine-containing monovalent substituent or fluorine, and n is 3 to 15, provided that all $R^5$s are not fluorine).

**6.** A positive electrode for a lithium primary cell according to claim 1 or 2, wherein the phosphazene derivative is a solid at 25°C and is represented by the following formula (V):

$$(NPR^6{}_2)_n \qquad (V)$$

(wherein $R^6$ is independently a monovalent substituent or a halogen element; and n is 3 to 15).

**7.** A positive electrode for a lithium primary cell according to claim 1 or 2, wherein the isomer is represented by the following formula (VI) and is an isomer of a phosphazene derivative represented by the following formula (VII):

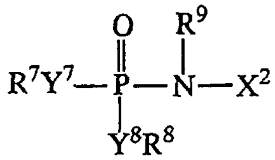

· · · · · (VI)

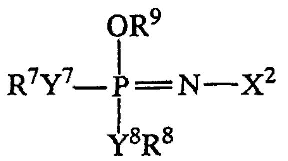

· · · · · (VII)

(in the formulae (VI) and (VII), $R^7$, $R^8$ and $R^9$ are independently a monovalent substituent or a halogen element; $X^2$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^7$ and $Y^8$ are independently a bivalent connecting group, a bivalent element or a single bond).

**8.** A method of producing a positive electrode for a lithium primary cell, **characterized by** comprising (I) a step of milling an active substance for positive electrode and a phosphazene derivative and/or an isomer of a phosphazene derivative to produce a paste; and
(II) a step of applying the paste to a positive electrode manufacturing jig and drying and shaping into a desired form to produce a positive electrode of a paste body.

**9.** A lithium primary electrode comprising a positive electrode described in any one of claims 1 to 7, a negative electrode, and an electrolyte comprising an aprotic organic solvent and a support salt.

**10.** A lithium primary cell according to claim 9, wherein the aprotic organic solvent is added with a phosphazene derivative and/or an isomer of a phosphazene derivative.

**11.** A lithium primary cell according to claim 10, wherein the phosphazene derivative and/or the isomer of the phosphazene derivative included in the positive electrode are the same as the phosphazene derivative and/or the isomer of the phosphazene derivative added to the aprotic organic solvent.

**12.** A lithium primary cell according to claim 10, wherein the phosphazene derivative and/or the isomer of the phosphazene derivative included in the positive electrode are different from the phosphazene derivative and/or the isomer of the phosphazene derivative added to the aprotic organic solvent.

**13.** A lithium primary cell according to any one of claims 10 to 12, wherein the phosphazene derivative added to the aprotic organic solvent has a viscosity at 25°C of not more than 100 mPa · s (100 cP) and is represented by the following formula (I) or (II):

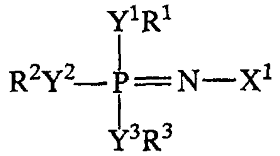

····· (I)

(wherein $R^1$, $R^2$ and $R^3$ are independently a monovalent substituent or a halogen element; $X^1$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^1$, $Y^2$ and $Y^3$ are independently a bivalent connecting group, a bivalent element or a single bond)

$$(NPR^4_2)_n \qquad (II)$$

(wherein $R^4$ is independently a monovalent substituent or a halogen element; and n is 3 to 15).

**14.** A lithium primary cell according to claim 13, wherein the phosphazene derivative of the formula (II) is represented by the following formula (III):

$$(NPF_2)_n \qquad (II)$$

(wherein n is 3 to 15).

**15.** A lithium primary cell according to claim 13, wherein the phosphazene derivative of the formula (II) is represented by the following formula (IV):

$$(NPR^5{}_2)_n \qquad (IV)$$

(wherein $R^5$ is independently a monovalent substituent or a halogen element and at least one of all $R^5$s is a fluorine-containing monovalent substituent or fluorine, and n is 3 to 15, provided that all $R^5$s are not fluorine).

**16.** A lithium primary cell according to any one of claims 10 to 12, wherein the phosphazene derivative added to the aprotic organic solvent is a solid at 25°C and is represented by the following formula (V):

$$(NPR^6{}_2)_n \qquad (V)$$

(wherein $R^6$ is independently a monovalent substituent or a halogen element; and n is 3 to 15).

**17.** A lithium primary cell according to any one of claims 10 to 12, wherein the isomer of the phosphazene derivative added to the aprotic organic solvent is represented by the following formula (VI) and is an isomer of a phosphazene derivative represented by the following formula (VII):

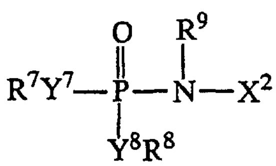

····· (VI)

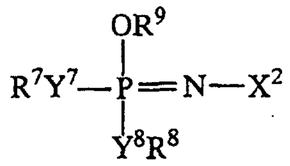

····· (VII)

(in the formulae (VI) and (VII), $R^7$, $R^8$ and $R^9$ are independently a monovalent substituent or a halogen element; $X^2$ is a substituent containing at least one element selected from the group consisting of carbon, silicon, germanium, tin, nitrogen, phosphorus, arsenic, antimony, bismuth, oxygen, sulfur, selenium, tellurium and polonium; and $Y^7$ and $Y^8$ are independently a bivalent connecting group, a bivalent element or a single bond).

## INTERNATIONAL SEARCH REPORT

International application No.
PCT/JP03/02869

A. CLASSIFICATION OF SUBJECT MATTER
Int.Cl[7] H01M4/06, H01M4/62, H01M4/08, H01M6/16

According to International Patent Classification (IPC) or to both national classification and IPC

B. FIELDS SEARCHED

Minimum documentation searched (classification system followed by classification symbols)
Int.Cl[7] H01M4/06, H01M4/62, H01M4/08, H01M6/16

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 00/41258 A1 (SRI INTERNATIONAL),<br>13 July, 2000 (13.07.00),<br>Page 1, lines 6 to 8; page 12, lines 4 to 12;<br>page 13, lines 1 to 3; page 15, lines 12 to 19;<br>All claims<br>& JP 2002-534775 A | 1,2,9<br>3-8,10-17 |
| Y | JP 6-13108 A (Bridgestone Corp.),<br>21 January, 1994 (21.01.94),<br>Claims; Par. Nos. [0011] to [0012]<br>(Family: none) | 3-8,10-17 |
| Y | JP 2001-102088 A (Bridgestone Corp.),<br>13 April, 2001 (13.04.01),<br>Claims; Par. No. [0073]<br>& EP 1205997 A1 | 3-8,10-17 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 April, 2003 (03.04.03) | 15 April, 2003 (15.04.03) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP03/02869

C (Continuation). DOCUMENTS CONSIDERED TO BE RELEVANT

| Category* | Citation of document, with indication, where appropriate, of the relevant passages | Relevant to claim No. |
|---|---|---|
| Y | JP 3-17346 B2 (Toshiba Battery Co., Ltd.), 07 March, 1991 (07.03.91), Page 2, column 3, lines 25 to 35 (Family: none) | 8 |

Form PCT/ISA/210 (continuation of second sheet) (July 1998)